# EUROPÄISCHE PATENTSCHRIFT

(11) **EP 2 593 998 B1**
(45) Veröffentlichungstag und Bekanntmachung des Hinweises auf die Patenterteilung: **01.11.2017**
(21) Anmeldenummer: 11749799.0
(22) Anmeldetag: 19.08.2011
(51) Int. Cl.: H02G 5/06, H02B 1/16

(54) **SCHIENENKASTEN UND SCHIENENVERTEILERSYSTEM MIT EINEM SCHIENENKASTEN**
BUSBAR TRUNKING UNIT AND BUSBAR TRUNKING SYSTEM COMPRISING A BUSBAR TRUNKING UNIT
COFFRET DE BARRES CONDUCTRICES ET SYSTÈME DE CANALISATIONS PRÉFABRIQUÉES COMPRENANT UN COFFRET DE BARRES CONDUCTRICES

(30) Priorität: 21.09.2010 DE 102010045946
(43) Veröffentlichungstag der Anmeldung: 22.05.2013
(73) Patentinhaber: Siemens Aktiengesellschaft, 80333 München (DE)
(72) Erfinder: BERTELS, Frank, 50765 Köln (DE); WELLNER, Olaf, 08209 Rebesgrün (DE)
(86) Internationale Anmeldenummer: PCT/EP2011/064312
(87) Internationale Veröffentlichungsnummer: WO 2012/038167

(56) Entgegenhaltungen:
- EP-A1- 0 933 855
- AU-B2- 598 576
- DE-A1- 4 225 837
- DE-A1-102009 032 619
- US-A- 3 571 488
- US-B1- 6 176 720

## Beschreibung

Die Erfindung betrifft einen Schienenkasten für ein Schienenverteilersystem mit in einer Längsrichtung langgestreckten Stromschienen, die ummantelt von einem Schienengehäuse, flach nebeneinander in dem Schienengehäuse angeordneten sind, bei dem jede der Stromschienen an einem ersten Ende eine erste Ausnehmung und an einem zweiten Ende eine zweite Ausnehmung aufweist, wobei die Ausnehmungen jeweils zur Aufnahme eines Bolzens einer Einbolzenverbindung dienen, über die Stromschienen mit zugeordneten Stromschienen benachbarter Schienenkästen des Schienenverteilersystems Strom leitend und mechanisch verbindbar sind, bei dem das Schienengehäuse zwei Seitenprofile und zwei Deckprofile aufweist, wobei die Seitenprofile Öffnungen zur Betätigung der Einbolzenklemmen aufweisen und wobei ein erstes der Deckprofile die ersten Enden der Stromschienen und das zweite der Deckprofile die zweiten Enden der Stromschienen überragt.

Die Erfindung betrifft weiterhin ein Schienenverteilersystem mit zumindest einem derartigen Schienenkasten, als Teil eines aus stirnseitig aneinander gekoppelten Schienenkästen gebildeten Schienenstranges.

Beim Aufbau eines Schienenstranges eines insbesondere luftisolierten Schienenverteilersystems, durch stirnseitige Aneinanderkopplung von vormontierten gattungsgemäßen Schienenkästen, ist ein PE-Leiter vorzusehen. Bisher aus der Praxis bekannte PE-Leiter sind bei derartigen gattungsgemäßen Schienenkästen dadurch gebildet, dass zum einen eine extra Stromschiene vorgesehen ist, die über CU-Laschen mit dem Schienengehäuse verbunden wird, um im Fehlerfall "einpoliger Kurzschluss gegen Erde(PE)" Kurzschlussströme zu tragen. Dabei mussten die Gehäuseteile speziell präpariert werden, um definierte Stromübergangspunkte zu schaffen.

Insbesondere aus der US 6 176 720 B1 ist bereits ein Schienenkasten für ein Verteilersystem mit in Längsrichtung verlaufenden Stromschienen bekannt, die umgeben von einem Schienengehäuse, flach nebeneinander in dem Schienengehäuse angeordneten sind. Jede der Stromschienen weist an beiden Enden je eine Ausnehmung auf, die jeweils zur Aufnahme eines Bolzens einer Einbolzenverbindung dienen. Über die Einbolzenverbindung sind die Stromschienen mit zugeordneten Stromschienen benachbarter Schienenkästen Strom leitend und mechanisch verbunden. Jedes Schienengehäuse weist zwei Seitenprofile und zwei Deckprofile auf, wobei die Seitenprofile Öffnungen zur Betätigung von Einbolzenklemmen aufweisen. Dabei überragen die Deckprofile beidseitig die Enden der Stromschienen.

Weiter ist aus der US 3,571,488 A eine geschlossene Sammelschienenleitung mit mehreren gesondert isolierten und in einem Gehäuse angeordneten Stromschienen bekannt. Dabei weisen die Schienen im Endbereich Bohrungen auf, durch welche sich ein isolierender Bolzen zur Arretierung der Schienen mit dem Gehäuse erstreckt. Im Endbereich weisen die Schienen sowie das Gehäuse eine Nut auf, um einen durchgehenden Bolzen des nächsten Kanalabschnittes aufzunehmen. Die Kanäle sowie die Anschlussabdeckungen sind mit einem Metall hoher Leitfähigkeit plattiert, um einen Erdrückleiter geringen Widerstandes zu erzeugen.

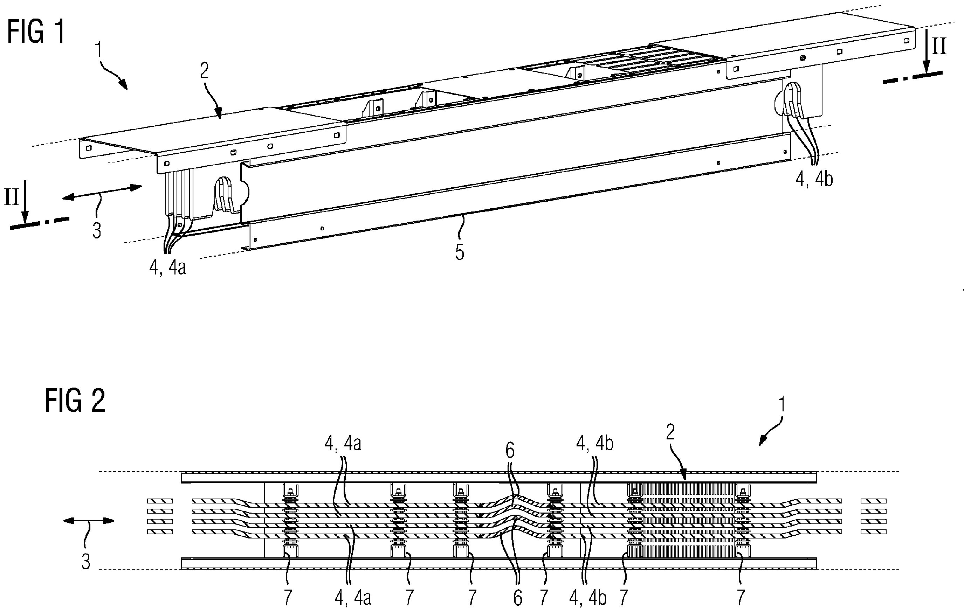

Ein gattungsgemäßer, aus der Praxis bekannter Schienenkasten ist in den Figuren 1 und 2 dargestellt.

Ausgehend von einem Schienenkasten mit den Merkmalen des Oberbegriffes des Patentanspruches 1 liegt der Erfindung die Aufgabe zu Grunde, den Schienenkasten kostengünstiger und sicherer zu gestalten.

Gelöst wird diese Aufgabe durch einen Schienenkasten, bei dem die Seitenprofile und die Deckprofile aus Strom leitendem Material bestehen und zur elektrischen Verbindung einander zugeordnete elektrische Kontaktflächen ausbilden, die unter Kontaktkraft elektrisch leitend unmittelbar aneinander und metallisch blank gehalten sind, um einen als PE-Leiter verwendbaren Strompfad zu bilden, wobei die übrigen Flächen zusätzlich mit einer Farbschicht versehen sind.

Vorteilhafte Ausgestaltungen des neuen Schienenkastens sind in den Ansprüchen 2 bis 4 angegeben.

Vorzugsweise bilden dabei die beiden Teilmäntel zu ihrer elektrisch leitenden Verbindung einander zugeordnete elektrische Kontaktflächen, die unter Kontaktkraft elektrisch leitend unmittelbar aneinander gehalten sind.

Bevorzugt sind ein erstes der beiden Teilstücke jeder der Stromschienen in einem ersten der beiden Teilmäntel des Schienenkastens und das zweite der Teilstücke jeder der Stromschienen in dem zweiten der beiden Teilmäntel des Schienenkastens in der Längsrichtung verschiebbar und quer zur Längsrichtung ortsfest gehalten, wobei zum Einen die beiden Teilstücke und zum Anderen die beiden Teilmäntel jeweils unverlierbar miteinander verbunden sind.

Zur gegenseitigen Fixierung der beiden Teilmäntel des Schienengehäuses sind bevorzugt erste Befestigungsmittel vorgesehen, die Langlöcher des ersten der beiden Teilmäntel und zugeordnete Befestigungsbohrungen des zweiten der beiden Teilmäntel durchgreifen.

Eine weitere bevorzugte Ausgestaltung des neuen Schienenkastens sieht vor, dass sich die Teilstücke zur Strom leitenden Verbindung an ihren einander zugewandten Stirnseiten überlappen, wobei zur gegenseitigen Fixierung der Teilstücke ein zweites Befestigungsmittel vorgesehen sein kann, das im Überlappungsbereich einander zugeordnete Langlöcher der Stromschienen durchgreift, so wie dies bereits von Stromschienen bekannt ist, die zum Antrieb von Schienenfahrzeugen dienen (US 5,224, 575 A, DE 196 09 006 C2).

Um die Montage des Schienenkastens und das Einstellen der Länge des Schienengehäuses zu erleichtern ist weiterhin mit Vorteil vorgesehen, die beiden Teilmäntel jeweils mit Handgriffen zu versehen.

Die Erfindung wird im Weiteren anhand der nachfolgenden Figuren beschrieben. Es zeigen:
- Figuren 1 und 2: ein aus der Praxis bekanntes Schienenverteilersystem mit einem Schienenkasten in Form eines Dehnungskastens,
- Figur 3: ein Schienenverteilersystem mit einem erfindungsgemäßen Schienenkasten in perspektivischer Darstellung mit Stromschiene und Schienengehäuse,

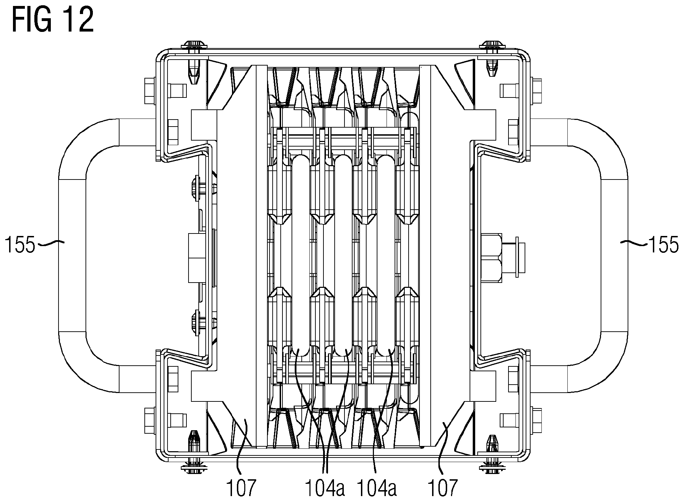

- Figuren 4 sowie 11 und 12: drei verschiedene Schnittdarstellungen des Schienenkastens gemäß der Figur 3,
- Figuren 5 bis 9: Einzelteile des Schienengehäuses,
- Figur 10: zwei Teilstücke einer der Stromschienen mit Verbindungsmittel in Explosionsdarstellung und
- Figur 13 bis 15: den Schienenkasten teilweise in Explosionsdarstellung, bei dem die Stromschienen und das Schienengehäuse jeweils für sich auf verschiedene Längen eingestellt sind.

Die Figuren 1 und 2 zeigen ein aus der Praxis bekanntes Schienenverteilersystem 1 mit einem Schienenkasten 2 in Form eines Dehnungskastens, der Teil eines Stromschienenstranges des Schienenverteilersystems ist. Der Dehnungskasten 2 weist in einer Längsrichtung 3 langgestreckte Stromschienen 4 auf, die ummantelt von einem Schienengehäuse 5, flach nebeneinander in dem Schienengehäuse 5 angeordneten sind. Bei diesem bekannten Schienenkasten besteht jede der Stromschienen 4 aus zwei separaten, als starre Profile ausgebildeten Teilstücken 4a, 4b, die in der Längsrichtung 3 in Reihe Strom leitend miteinander verbunden sind, wobei die Teilstücke 4a, 4b in dem Schienengehäuse 5 in der Längsrichtung unabhängig voneinander verschiebbar und quer zur Längsrichtung 3 ortsfest gehalten sind. Hierzu dienen Stütz- und Haltevorrichtungen 7, wie sie bereits aus der Druckschrift EP 0 530 521 B1 bekannt sind.

Die beiden Teilstücke 4a, 4b jeder der Stromschienen 4 sind jeweils mittels eines flexiblen Strombandes 6 Strom leitend miteinander verbunden, wobei die beiden Enden des Strombandes an die einander zugewandten Stirnseiten der beiden Teilstücke 4a, 4b angeschweißt sind.

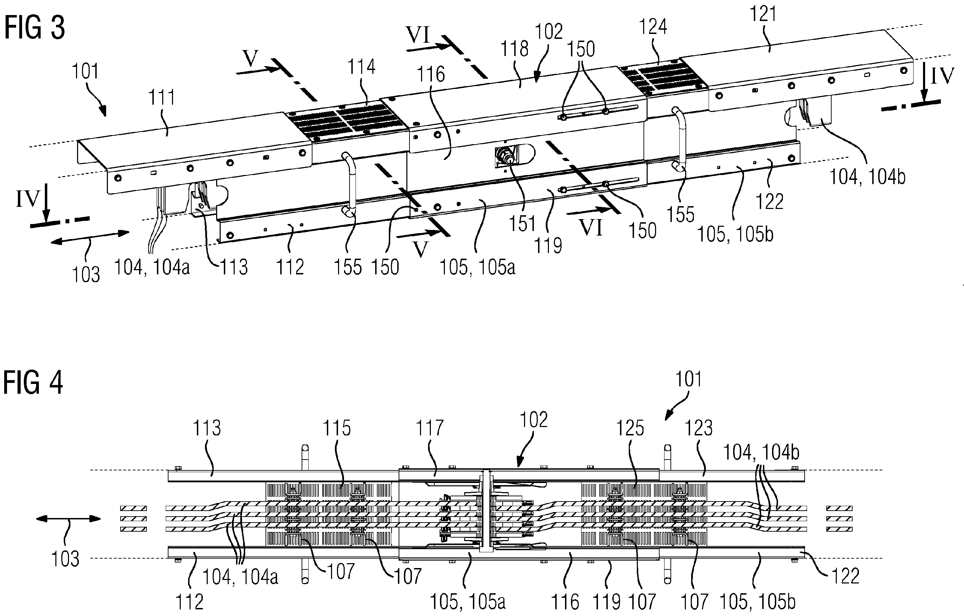

Die Figuren 3 und 4 zeigen ein erfindungsgemäßes Schienenverteilersystem 101 mit einem erfindungsgemäßen Schienenkasten 102. Auch der erfindungsgemäße Schienenkasten 102 weist in einer Längsrichtung 103 langgestreckte Stromschienen 104 auf, die ein Leiterschienenpaket bilden und die ummantelt von einem Schienengehäuse 105, flach nebeneinander in dem Schienengehäuse 105 angeordneten sind. Des Weiteren besteht auch hier jede der Stromschienen 104 aus zwei separaten, als starre Profile ausgebildeten Teilstücken 104a, 104b, die in der Längsrichtung 103 in Reihe Strom leitend miteinander verbunden sind. Auch hier sind die Teilstücke 104a, 104b in der aus der Druckschrift EP 0 530 521 B1 bekannten Weise mittels Stütz- und Haltevorrichtungen 107 in dem Schienengehäuse 105 in der Längsrichtung 103 unabhängig voneinander verschiebbar und quer zur Längsrichtung 103 ortsfest gehalten. Die beiden Teilstücke sind - wie im Weiteren noch gezeigt ist - unverlierbar aber lösbar miteinander verbunden.

Das Schienengehäuse 105 besteht aus zwei Teilmänteln 105a und 105b, die teleskopartig ineinander greifen und die zur Längenänderung des Schienengehäuses 105 stufenlos, unterschiedlich weit teleskopartig ineinander schiebbar sind.

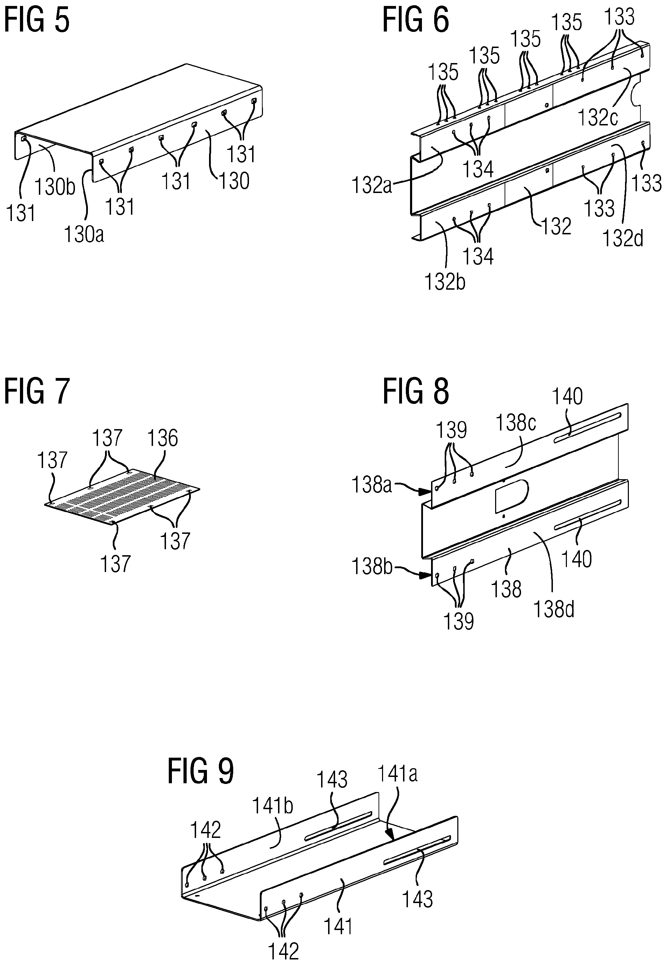

Ein erster 105a der beiden Teilmäntel ist dabei von neun Gehäuseteilen 111 bis 119 gebildet. Der zweite Teilmantel ist von fünf Gehäuseteilen 121 bis 125 gebildet. Jeweils mehrere der Gehäuseteile sind Gleichteile, die in den Figuren 5 bis 9 noch einmal einzeln dargestellt sind.

So sind die in den Figuren 3 und 4 mit 111 und 121 bezeichneten Gehäuseteile gemäß der Figur 5 als U-förmig gebogene erste Deckprofile 130 ausgebildet, die jeweils einen endseitigen Flansch bilden. Jeder dieser endseitigen Flansche dient zur Verbindung mit einem weiteren Schienenkasten des Schienenstranges und weist hierzu erste Befestigungsbohrungen 131 auf.

Die in den Figuren 3 und 4 mit 112, 113, 122 und 123 bezeichneten Gehäuseteile sind gemäß der Figur 6 W-förmig gebogene erste Seitenprofile 132. Diese weisen zweite Befestigungsbohrungen 133 zur Verbindung mit einem weiteren Schienenkasten des Schienenstranges sowie dritte 134 und vierte 135 Befestigungsbohrungen auf.

Die in den Figuren 3 und 4 mit 114, 115, 124 und 125 bezeichneten Gehäuseteile sind gemäß der Figur 7 flache Lüftungsgitter 136 mit fünften Befestigungsbohrungen 137. Dabei dienen die vierten 135 und fünften 137 Befestigungsbohrungen zur Verbindung der ersten Seitenprofile 132 mit den Lüftungsgittern 136.

Die in den Figuren 3 und 4 mit 116 und 117 sowie 118 und 119 bezeichneten Gehäuseteile bilden einen die Lüftungsgitter und die ersten Seitenprofile übergreifenden und verbindenden weiteren Flansch, der die Funktion der teleskopartigen Führung des zweiten Teilmantels 105b in dem ersten Teilmantel 105a erfüllt. Hierzu weisen die Gehäuseteile 116 und 117, die gemäß der Figur 8 W-förmig gebogene zweite Seitenprofile 138 bilden, und die Gehäuseteile 118 und 119, die gemäß der Figur 9 U-förmig gebogene zweite Deckprofile 141 bilden, jeweils an gegenüberliegenden Seiten Langlöcher 140 bzw. 143 auf, in denen gemäß der Figur 3 erste Befestigungsmittel 150 in Form von Befestigungsschrauben geführt sind. Mittels der Befestigungsschrauben sind die beiden Teilmäntel 105a, 105b unverlierbar miteinander verbunden, da diese Befestigungsmittel, die Langlöcher 140, 143 des ersten der beiden Teilmäntel 105a und die zugeordnete Befestigungsbohrungen 134 des zweiten 105b der beiden Teilmäntel durchgreifen.

Die beiden Teilmäntel 105a, 105b bestehen jeweils aus einem Strom leitenden Material - insbesondere aus verzinktem Stahl oder Aluminium - und sind elektrisch leitend derart miteinander verbunden sind, dass sie einen als PE-Leiter verwendbaren Strompfad bilden. Zur elektrisch leitenden Verbindung bilden die beiden Teilmäntel 105a, 105b dabei Kontaktpaare aus einander zugeordneten, elektrischen Kontaktflächen, die unter Kontaktkraft elektrisch leitend unmittelbar aneinander gehalten sind.

Diese Kontaktflächen sind dabei an den U-förmig gebogenen ersten Deckprofilen 130, den W-förmig gebogenen ersten Seitenprofilen 132, den W-förmig gebogenen zweiten Seitenprofilen 138 und den U-förmig gebogenen zweiten Deckprofilen 141 in der in den Figuren 5 und 6 sowie 8 und 9 gezeigten Weise ausgebildet.

So bilden gemäß der Figur 5 die nach innen weisenden, mit den Befestigungsbohrungen 131 versehenen Flächen der ersten Deckprofile 130 erste 130a und 130b der Kontaktflächen und gemäß der Figur 9 die nach innen weisenden, mit den Befestigungsbohrungen 142 und den Langlöchern 143 versehenen Flächen der zweiten Deckprofile 141 zweite 141a und 141b der Kontaktflächen. Hierzu sind die genannten Flächen, die die ersten und zweiten der Kontaktflächen bilden, metallisch blank gehalten, während die übrigen Flächen der aus Strom leitenden Material - insbesondere aus verzinktem Stahl oder Aluminium - gebildeten Deckprofile 130 und 141 zusätzlich mit einer Farbschicht versehen sind.

Weiterhin bilden gemäß der Figur 6 Abschnitte der nach außen weisenden, mit den Befestigungsbohrungen 133 und 134 versehenen Flächen der ersten Seitenprofile 132 dritte 132a bis 132d der Kontaktflächen. Außerdem bilden gemäß der Figur 8 die mit den Befestigungsbohrungen 139 und den Langlöchern 140 versehenen Schenkel der zweiten Seitenprofile 138 mit ihren nach innen und nach außen weisenden Flächen vierte 138a bis 138d der Kontaktflächen. Auch hier sind die genannten Flächen, die die dritten und vierten der Kontaktflächen bilden, metallisch blank gehalten, während die übrigen Flächen der aus Strom leitenden Material - insbesondere aus verzinktem Stahl oder Aluminium - gebildeten Seitenprofile 132 und 138 zusätzlich mit einer Farbschicht versehen sind.

Somit sind die Gehäuseteile 122 und 116 sowie 123 und 117 in Überlappungsbereichen metallisch blank und über Kontaktpaare, die entsprechend aus den Kontaktflächen 132a, 132b, 138a und 138b gebildet sind, elektrisch leitend verbunden.

Weiterhin sind aber auch die Gehäuseteile 116, 118; 116, 119; 117, 118; 117, 119 in ihrem Überlappungsbereich metallisch blank und über Kontaktpaaren, die entsprechend aus den Kontaktflächen 138c, 138d, 141a und 141b gebildet sind, elektrisch leitend verbunden.

Außerdem sind die Gehäuseteile 112 und 116 sowie 113 und 117 in Überlappungsbereichen metallisch blank und über Kontaktpaaren, die entsprechend aus den Kontaktflächen 132a, 132b, 138a und 138b gebildet sind, elektrisch leitend verbunden.

Durch die mit 150 bezeichneten Befestigungsmittel (hier Verschraubungen) werden die einander zugeordneten der blanken Kontaktflächen 130a, 130b, 132a bis 132d, 138a bis 138d und 141, 142 aufeinandergepresst und jeweils eine leitfähige, strombelastbare Verbindung hergestellt.

Die leitfähige Verbindung ist so ausgeführt, dass auch Kurzschlussströme im Fehlerfall "einpoliger Kurzschluss gegen Erde (PE)" von dem Schienengehäuse 105 geführt werden können. Hierzu sind die Kontaktflächen so groß ausgebildet, dass selbst bei maximaler Länge des Schienengehäuses 105 die Kontaktflächen jedes der durch die elektrische Verbindung der einzelnen Gehäuseteile entstandenen Gehäuseteil-Paare in Summe jeweils eine Überlappung von mindestens 450mm² pro kA Kurzschlussstrom bilden. Somit ist das Schienengehäuse 105 als PE-Leiter verwendbar.

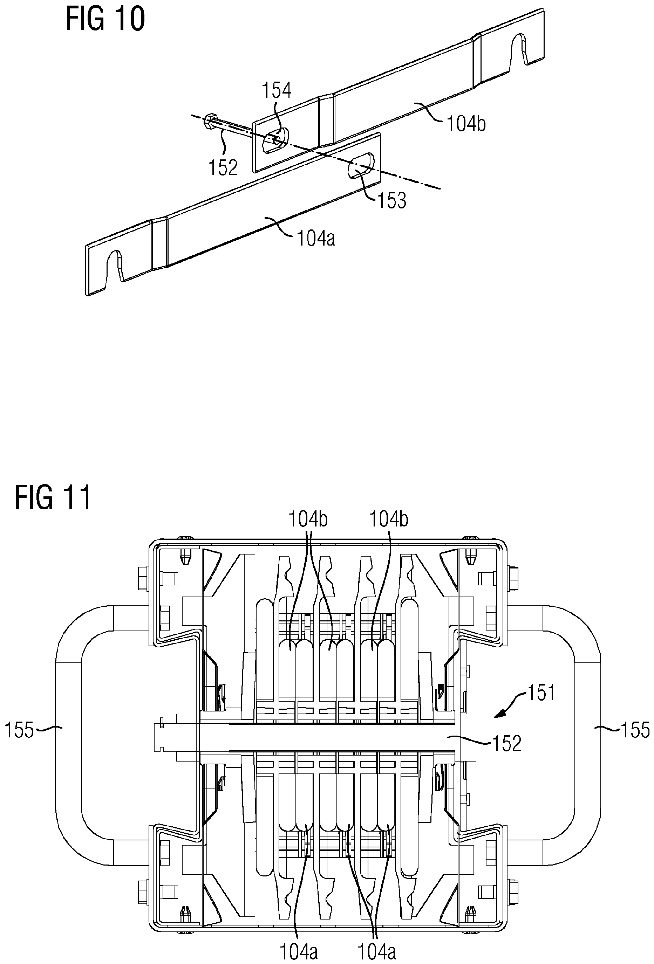

Gemäß der Figur 10 ist das Teilstück 104b der Stromschienen an seinem dem Teilstück 104a zugewandten Ende gekröpft und die beiden Teilstücke sind an ihren einander zugewandten Stirnseiten zur Strom leitenden Verbindung überlappend angeordnet.

Gemäß der Figur 11 sind jeweils zwei der Stütz- und Haltevorrichtungen 107, die die ersten Teilstücke 104a der Stromschienen tragen, an den W-förmig gebogenen ersten Seitenprofilen 132 des ersten Teilmantels 105a abgestützt. Jeweils zwei weitere der Stütz- und Haltevorrichtungen 107, die die zweiten Teilstücke der Stromschienen tragen, sind an den W-förmig gebogenen ersten Seitenprofilen 132 des zweiten Teilmantels 105b abgestützt. Auf diese Weise ist das erste 104a der beiden Teilstücke jeder der Stromschienen in dem ersten 105a der beiden Teilmäntel des Schienenkastens und das zweite 104b der Teilsstücke jeder der Stromschienen in dem zweiten 105b der beiden Teilmäntel des Schienenkastens in der Längsrichtung 103 verschiebbar und quer zur Längsrichtung ortsfest gehalten.

Gemäß der Figur 11 ist zur gegenseitigen Fixierung der Teilstücke 104a und 104b ein zweites Befestigungsmittel 151 in Form einer aus der Druckschrift DE 42 25 837 C2 bekannten Einzelbolzenverbindungen vorgesehen, wobei ein Bolzen 152 dieser Einzelbolzenverbindung im Überlappungsbereich einander zugeordnete Langlöcher 153, 154 der Teilstücke 104a, 104b durchgreift. Mittels dieser Einzelbolzenverbindung sind gleichzeitig das Schienengehäuse 105 und das aus den Stromschienen 104 gebildete Leiterschienenpaket unverlierbar mechanisch miteinander verbunden.

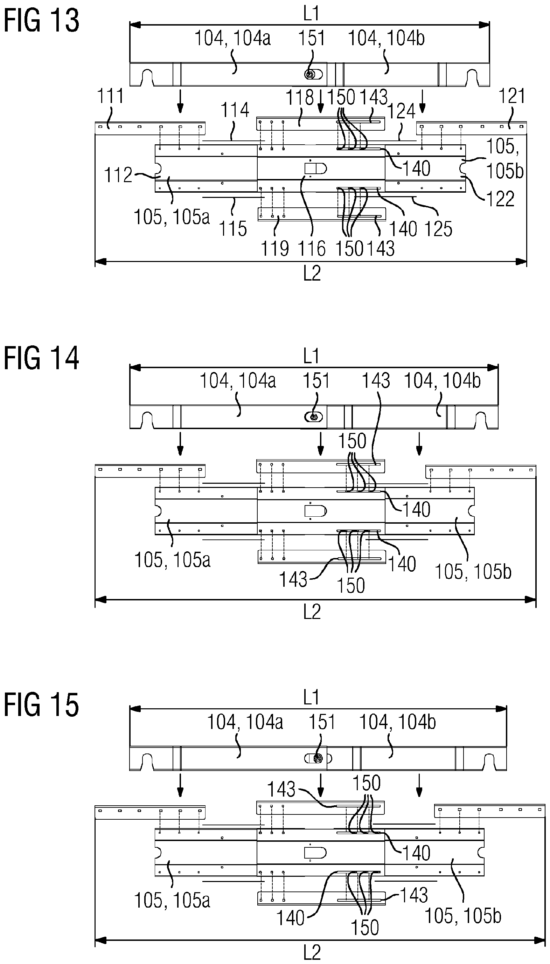

Gemäß der Figuren 13 bis 15 sind bei dem erfindungsgemäßen Schienenkasten die Länge L1 der aus den Teilstücken 104a und 104b gebildete Stromschienen 104 (die Länge L1 des Leiterschienenpaketes) und die Länge L2 des aus den Teilmänteln 105a und 105b gebildeten Schienengehäuses 105 über jeweils einen großen Längenbereich (von insbesondere jeweils bis zu 60mm) unabhängig voneinander frei (stufenlos) verstellbar. So zeigt die Figur 13 den Schienenkasten in einer ersten Endstellung, bei der sowohl die Länge L1 der Stromschienen 104 als auch die Länge L2 des Schienengehäuses 105 auf ihren kürzesten Wert eingestellt sind. Die Figur 14 zeigt eine mittlere Stellung, bei die Längen L1 und L2 auf Zwischenwerte eingestellt sind und die Figur 15 zeigt eine zweite Endstellung, bei der sowohl die Länge L1 der Stromschienen 104 als auch die Länge L2 des Schienengehäuses 105 auf ihren längsten Wert eingestellt sind.

Mit dem erfindungsgemäßen Schienenkasten 102 können bauseitig auftretende Toleranzen bei der Montage eines Schienestranges eines Schienenverteilersystems auf einfache, Zeit und Kosten sparende Weise ausgeglichen werden. Montage- und Fertigungstoleranzen sowie Projektierungsungenauigkeiten sind durch montagetechnisch einfache Installation des erfindungsgemäßen Schienenkasten vor Ort kompensierbar. Ein zeitaufwendiges Nachrüsten von Passtücken - wie es bisher in der Praxis erforderlich war - ist nicht mehr notwendig. Dabei werden die technischen Merkmale des Schienenverteilersystems bezüglich Stromtragfähigkeit, Kurzschlussfestigkeit, PE-Verbindung, IP-Schutzart oder die Bewegungsfreiheit des Leiterschienenpaketes gegenüber dem Schienengehäuse bei thermischer Längenausdehnung auf vorteilhafte Weise aufrecht erhalten. Wesentlich ist auch, dass die äußere Kontur des erfindungsgemäßen verstellbaren Schienenkastens 102 sehr der äußeren Kontur des übrigen Schienestranges ähnelt und sich damit optisch optimal in das Schienenverteilersystem integrieren lässt. Besondere Planungsvorschriften für die Auslegung des Schieneverteilersystems sind dabei nicht zu beachten.

Zur leichteren Montage des Schienenkastens 102 in dem Schienenstrang des Schieneverteilersystems 101 und zum Einstellen der Länge des Schienengehäuses 105 sind die beiden Teilmäntel 105a und 105b jeweils mit zwei Handgriffen 155 versehen.

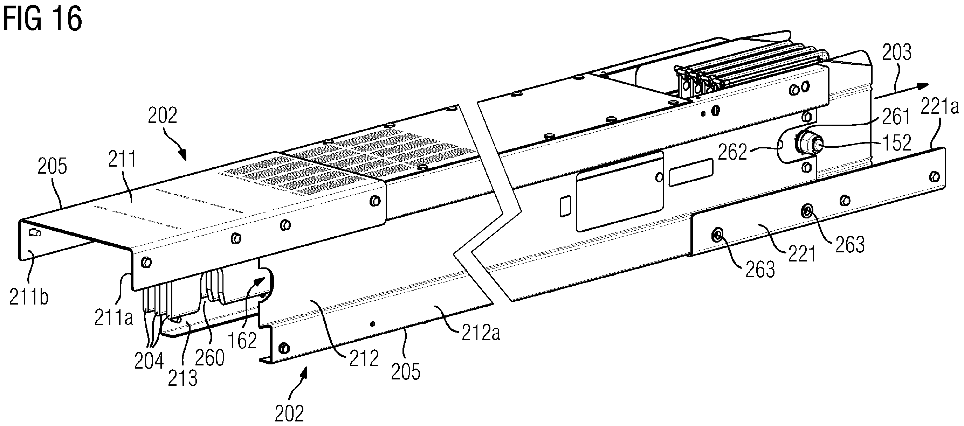

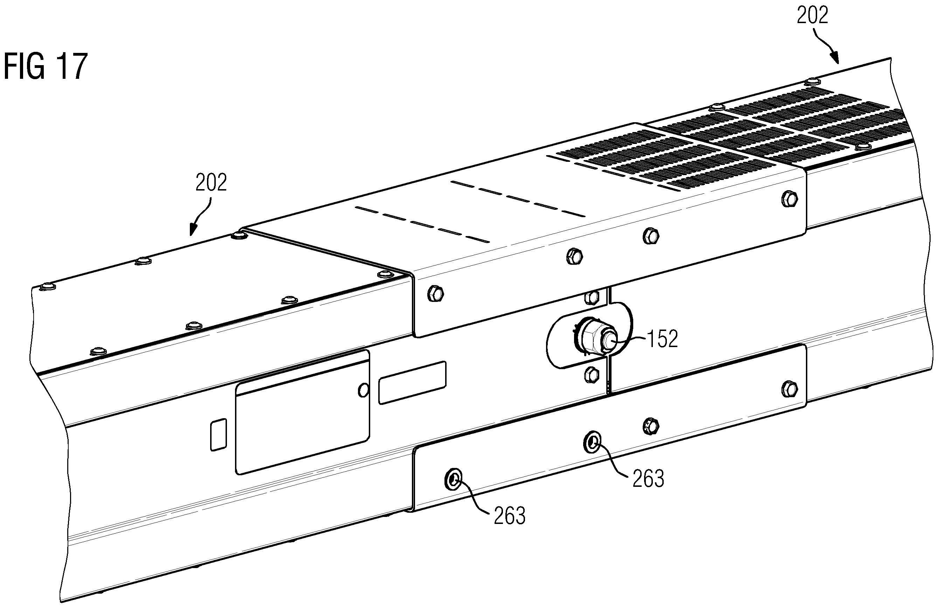

Die Figuren 16 und 17 zeigen einen weiteren Schienenkasten 202 des Schienenverteilersystems 101 mit in einer Längsrichtung 203 langgestreckten Stromschienen 204, die ummantelt von einem Schienengehäuse 205, flach nebeneinander in dem Schienengehäuse 205 angeordneten sind. Jede der Stromschienen 204 weist an einem ersten Ende eine erste Ausnehmung 260 und an einem zweiten Ende eine zweite Ausnehmung 261 auf, wobei die Ausnehmungen 260, 261 jeweils zur Aufnahme eines Bolzens 152 einer Einbolzenverbindung dienen, über die Stromschienen 204 mit zugeordneten Stromschienen benachbarter Schienenkästen des Schienenverteilersystems Strom leitend und mechanisch verbindbar sind.

Das Schienengehäuse 205 weist zwei Seitenprofile 212, 213 und zwei Deckprofile 211, 221 aufweist, wobei die Seitenprofile 212, 213 Öffnungen 162; 262 zur Betätigung der Einbolzenklemmen aufweisen und wobei ein erstes der Deckprofile 211 die ersten Enden der Stromschienen und das zweite der Deckprofile 221 die zweiten Enden der Stromschienen 204, überragt.

Die Seitenprofile 212, 213 und die Deckprofile 211, 221 bestehen aus Strom leitenden Material und sind elektrisch leitend derart verbunden, dass sie einen als PE-Leiter verwendbaren Strompfad bilden.

Zu ihrer elektrischen Verbindung bilden die Seitenprofile 212, 213 und die Deckprofile 211, 221 einander zugeordnete elektrische Kontaktflächen, die unter Kontaktkraft elektrisch leitend unmittelbar aneinander gehalten sind. So sind die Deckenprofile 211 und 221 in gleicher Weise wie die Deckprofile 130 an ihren nach innen weisenden Seiten mit Kontaktflächen 211a, 211b bzw. 221a, 221b versehen und die Seitenprofile 212, 213 sind in gleicher Weise wie die Seitenprofile 132 mit Kontaktflächen 212a, 212b bzw. 213a, 213b versehen.

Eines 221 der Deckprofile ist mit den Seitenprofilen 212, 213 mittels Nietmuttern 263 verbunden. Diese Nietmuttern 263 bilden mit ihrem Innengewinde Befestigungsmittel, die zur Montage des Schienenkastens an zugeordneten Stützelementen dienen.

Auch hier ist die leitfähige Verbindung so ausgeführt, dass auch Kurzschlussströme im Fehlerfall "einpoliger Kurzschluss gegen Erde (PE)" von dem Schienengehäuse 205 geführt werden können. Hierzu sind auch hier die Kontaktflächen so groß ausgebildet, dass selbst bei maximaler Länge des Schienengehäuses 205 die Kontaktflächen jedes der durch die elektrische Verbindung der einzelnen Gehäuseteile entstandenen Gehäuseteil-Paare in Summe jeweils eine Überlappung von mindestens 450mm² pro kA Kurzschlussstrom bilden. Somit ist das Schienengehäuse 205 ebenfalls als PE-Leiter verwendbar.

Bei den gezeigten erfindungsgemäßen Schienenkästen 102; 202 wird damit eine PE-Verbindung über die vorhandenen Gehäuseteile realisiert. Ein als separate Schiene ausgebildeter PE-Leiter, eine zusätzliche Verbindungslasche zur Verbindung der separaten Schiene mit dem Schienegehäuse und eine spezielle Präparation der Gehäuseteile sind damit nicht mehr erforderlich. Damit sind die erfindungsgemäßen Schienenkästen insgesamt kostengünstiger und montagefreundlicher. Die Deckprofile (111, 121; 211, 221) stellen sowohl die mechanische als auch die elektrische Verbindung (PE) zu den Seitenprofilen (112, 122, 113, 123; 212, 213) her.

Unter Verwendung von nur 3 Stromschienen für die Außenleiter ist die Realisierung von Schienenverteilersystemen für IT-Netze (L1, L2, L3, PE) oder TN-S-Netze ohne N (L1, L2, L3, PE) möglich. Weiterhin ist unter Verwendung von nur 4 Stromschienen für die Außenleiter und den Neutralleiter die Realisierung von Schienenverteilersystemen für TN-S-Netze (L1, L2, L3,N, PE) und TT-Netze mit Schutzleiter (L1, L2, L3, N, PE) möglich.

Durch die Einführung der Nietmuttern entfällt die Bereitstellung von zusätzlichen Befestigungselementen. Außerdem sind das Deckprofil 221 und die Seitenprofile 212, 213 mittels der Nietmuttern 263 unverlierbar miteinander verbunden. Dies erhöht die Montagefreundlichkeit.

Die Funktionen der mechanischen und der elektrischen Verbindung der Seitenprofile 112, 122, 113, 123; 212, 213 mit den Deckprofilen 111, 121; 211, 221 sind erfindungsgemäß kombiniert, so dass nicht nur die Montage erleichtert, sondern auch die Sicherheit erhöht wird, denn die sonst üblicher Weise zusätzliche elektrische Verbindung kann hier nicht vergessen werden. Die großen Überlappungen der einander zugeordneten Kontaktflächen sichert eine langzeitstabile elektrische Verbindung.

## Patentansprüche

1. Schienenkasten (102; 202) für ein Schienenverteilersystem (101) mit in einer Längsrichtung (103; 203) langgestreckten Stromschienen (104; 204), die ummantelt von einem Schienengehäuse (105; 205), flach nebeneinander in dem Schienengehäuse (105; 205) angeordneten sind,
bei dem jede der Stromschienen (104; 204) an einem ersten Ende eine erste Ausnehmung (160; 260) und an einem zweiten Ende eine zweite Ausnehmung (161; 261) aufweist, wobei die Ausnehmungen (160, 161; 260, 261) jeweils zur Aufnahme eines Bolzens (152) einer Einbolzenverbindung dienen, über die Stromschienen (104; 204) mit zugeordneten Stromschienen benachbarter Schienenkästen des Schienenverteilersystems Strom leitend mechanisch verbindbar sind,
bei dem das Schienengehäuse (105; 205) zwei Seitenprofile (112, 122, 113, 123; 212, 213) und zwei Deckprofile (111, 121; 211, 221) aufweist, wobei die Seitenprofile (112, 122, 113, 123; 212, 213) Öffnungen (162; 262) zur Betätigung der Einbolzenklemmen aufweisen und wobei ein erstes der Deckprofile (111; 211) die ersten Enden der Stromschienen und das zweite der Deckprofile (121; 221) die zweiten Enden der Stromschienen (104; 204) überragt, wobei die Seitenprofile (112, 122, 113, 123; 212, 213) und die Deckprofile (111, 121; 211, 221) aus Strom leitendem Material bestehen,
**dadurch gekennzeichnet, dass** die Seitenprofile (112, 122, 113, 123; 212, 213) und die Deckprofile (111, 121; 211, 221) zur elektrischen Verbindung einander zugeordnete elektrische Kontaktflächen ausbilden, die unter Kontaktkraft elektrisch leitend unmittelbar aneinander und metallisch blank gehalten sind, um einen als PE-Leiter verwendbaren Strompfad zu bilden, wobei die übrigen Flächen zusätzlich mit einer Farbschicht versehen sind.

2. Schienenkasten (102; 202) nach Anspruch 1,
**dadurch gekennzeichnet**,
die Seitenprofile (112, 122, 113, 123; 212, 213) und die Deckprofile (111, 121; 211, 221) zu ihrer elektrischen Verbindung einander zugeordnete elektrische Kontaktflächen bilden, die unter Kontaktkraft elektrisch leitend unmittelbar aneinander gehalten sind.

3. Schienenkasten (202) nach einem der Ansprüche 1 oder 2,
**dadurch gekennzeichnet**,
eines (221) der Deckprofile mit den Seitenprofilen (212, 213) mittels Nietmuttern (263) verbunden ist.

4. Schienenkasten (202) nach Anspruch 3,
**dadurch gekennzeichnet,**
**dass** die Nietmuttern (263) Befestigungsmittel bilden, die zur Montage des Schienenkastens an zugeordneten Stützelementen dienen.

5. Schienenverteilersystem (101) mit Schienenkästen (102; 202), die zur Bildung eines Schienenstranges stirnseitig aneinander gekoppelt sind,
**dadurch gekennzeichnet**,
zumindest einer der (102; 202) der Schienenkästen nach einem der Ansprüche 1 bis 4 ausgebildet ist.

## Claims

1. Busbar trunking unit (102; 202) for a busbar trunking system (101) comprising busbars (104; 204) which are elongated in a longitudinal direction (103; 203), are encased by a busbar housing (105; 205), and are arranged flat next to one another in the busbar housing (105; 205), wherein each of the busbars (104; 204) has a first recess (160; 260) at a first end and a second recess (161; 261) at a second end, the recesses (160, 161; 260, 261) serving in each case for receiving a bolt (152) of a single-bolt connection via which the busbars (104; 204) can be connected in an electrically conductive and mechanical manner to associated busbars of adjacent busbar trunking units of the busbar trunking system,
wherein the busbar housing (105; 205) has two lateral profiled elements (112, 122, 113, 123; 212, 213) and two covering profiled elements (111, 121; 211, 221), the lateral profiled elements (112, 122, 113, 123; 212, 213) having openings (162; 262) for actuating the single-bolt terminals and a first of the covering profiled elements (111; 211) projecting beyond the first ends of the busbars and the second of the covering profiled elements (121; 221) projecting beyond the second ends of the busbars (104; 204),
wherein the lateral profiled elements (112, 122, 113, 123; 212, 213) and the covering profiled elements (111, 121; 211, 221) are made of current-conducting material,
**characterised in that**
the lateral profiled elements (112, 122, 113, 123; 212, 213) and the covering profiled elements (111, 121; 211, 221), in order to establish their electrically conductive connection, form mutually associated electrical contact surfaces which are held under contact force directly against one another in an electrically conductive manner and kept metallically bare, in order to form a current path which can be used as a PE conductor, wherein the remaining surfaces are additionally provided with a colour coating.

2. Busbar trunking unit (102; 202) according to claim 1,
**characterised in that**
in order to establish their electrical connection the lateral profiled elements (112, 122, 113, 123; 212, 213) and the covering profiled elements (111, 121; 211, 221) form mutually associated electrical contact surfaces which are held under contact force directly against one another in an electrically conductive manner.

3. Busbar trunking unit (202) according to one of claims 1 or 2,
**characterised in that**
one (221) of the covering profiled elements is connected to the lateral profiled elements (212, 213) by means of rivet nuts (263).

4. Busbar trunking unit (202) according to claim 3,
**characterised in that**
the rivet nuts (263) form fixing means which serve for mounting the busbar trunking unit to associated support elements.

5. Busbar trunking system (101) comprising busbar trunking units (102; 202) which are coupled to one another by their front face in order to form a busbar daisychain,
**characterised in that**
at least one (102; 202) of the busbar trunking units is embodied according to one of claims 1 to 4.

## Revendications

1. Coffret (102 ; 202) de rails pour un système (101) de répartition de rails comprenant des rails (104 ; 204) de contact, qui s'étendent en longueur dans une direction (103 ; 203) longitudinale et qui, en étant enveloppés d'une enveloppe (105 ; 205) de rail, sont disposés à plat les uns à côté des autres dans l'enveloppe (105 ; 205) de rails,
dans lequel chacun des rails (104 ; 204) de contact a, à une première extrémité, un premier évidement (160 ; 260) et, à une deuxième extrémité, un deuxième évidement (161 ; 261), les évidements (160, 161 ; 260, 261) servant chacun à la réception d'un axe (152) d'une liaison monoaxe par laquelle des rails (104 ; 204) de contact peuvent être reliés mécaniquement d'une manière conductrice du courant à des coffrets de rail voisins de rails de constact associés du système de répartition de rails,
dans lequel l'enveloppe 105 ; 205) de rail a deux profilés (112, 122, 113, 123 ; 212, 213) latéraux et deux profilés (111, 121 ; 211, 221) de recouvrement, les profilés (112, 122, 113, 123 ; 212, 213) latéraux ayant des ouvertures (162 ; 262) d'actionnement de pince de mono axe et un premier des profilés (111 ; 211) de recouvrement dépasse des premières extrémités des rails de contact et le deuxième des profilés (121 ; 221) de recouvrement dépasse des deuxièmes extrémités des rails (104 ; 204) de contact,
les profilés (112, 122, 113, 123 ; 212, 213) latéraux et les profilés (111, 121 ; 211, 221) de recouvrement étant en un matériau conducteur du courant,
**caractérisé en ce que**
les profilés (112, 122, 113, 123 ; 212, 213) latéraux et les profilés (111, 121 ; 211, 221) de recouvrement sont, pour une liaison électrique, constitués de surfaces de contact électriques associées l'une à l'autre, qui sont maintenues sous une force de contact d'une manière conductrice de l'électricité directement l'un contre l'autre et nus métalliquement, pour former un trajet de courant pouvant être utilisé comme conducteur PE, les autres surfaces étant pourvues supplémentairement d'une couche de peinture.

2. Coffret (102 ; 202) de rails suivant la revendication 1,
**caractérisé en ce que**
les profilés (112, 122, 113, 123 ; 212, 213) latéraux et les profilés (111, 121 ; 211, 221) de recouvrement forment, pour leur liaison électrique, des surfaces de contact électriques associées les unes aux autres, qui sont maintenues sous une force de contact d'une manière conductrice de l'électricité directement les uns contre les autres.

3. Coffret (102 ; 202) de rails suivant l'une des revendications 1 ou 2,
**caractérisé en ce que**
l'un (221) des profilés de recouvrement est relié aux profilés (212, 213) latéraux au moyen d'écrous (263) à rivet.

4. Coffret (102 ; 202) de rails suivant la revendication 3,
**caractérisé en ce que**
les écrous (263) à rivet forment des moyens de fixation qui servent à monter les coffrets de rails sur des éléments d'appui associés.

5. Système (101) de répartition de rails comprenant des coffrets (102 ; 202) de rails qui sont couplés les uns aux autres du côté frontal pour former une file de rails,
**caractérisé en ce qu'**
au moins l'un (102 ; 202) des coffrets de rails est constitué suivant l'une des revendications 1 à 4.
